(19) Europäisches Patentamt / European Patent Office / Office européen des brevets

(11) **EP 2 102 695 B1**

(12) **EUROPÄISCHE PATENTSCHRIFT**

(45) Veröffentlichungstag und Bekanntmachung des Hinweises auf die Patenterteilung:
**27.03.2013 Patentblatt 2013/13**

(21) Anmeldenummer: **07818636.8**

(22) Anmeldetag: **02.10.2007**

(51) Int Cl.:
*G02B 21/16* (2006.01)      *G02B 21/00* (2006.01)
*G01N 21/64* (2006.01)

(86) Internationale Anmeldenummer:
**PCT/EP2007/008556**

(87) Internationale Veröffentlichungsnummer:
**WO 2008/043460 (17.04.2008 Gazette 2008/16)**

(54) **VERFAHREN UND ANORDNUNG ZUR PARALLELISIERTEN MIKROSKOPISCHEN BILDGEBUNG**

METHOD AND ARRANGEMENT FOR COLLIMATED MICROSCOPIC IMAGING

PROCÉDÉ ET DISPOSITIF DE REPRODUCTION D'IMAGES MICROSCOPIQUES PARALLÉLISÉES

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **06.10.2006 DE 102006047912**

(43) Veröffentlichungstag der Anmeldung:
**23.09.2009 Patentblatt 2009/39**

(73) Patentinhaber: **Carl Zeiss Microscopy GmbH 07745 Jena (DE)**

(72) Erfinder:
• **KEMPE, Michael**
  **07751 Jena (DE)**
• **KRAMPERT, Gerhard**
  **07743 Jena (DE)**
• **WALD, Matthias**
  **07751 Kunitz (DE)**
• **WOLLESCHENSKY, Ralf**
  **07743 Jena (DE)**

(74) Vertreter: **Hampe, Holger
Carl Zeiss Jena GmbH,
Zentralbereich Recht und Patente,
Patentabteilung
Carl-Zeiss-Promenade 10
07745 Jena (DE)**

(56) Entgegenhaltungen:
WO-A-2007/009812      DE-A1-102004 034 962
US-A1- 2001 045 523      US-A1- 2002 141 052

• KLAR T A ET AL: "Breaking Abbe's diffraction resolution limit in fluorescence microscopy with stimulated emission depletion beams of various shapes" PHYSICAL REVIEW E. STATISTICAL PHYSICS, PLASMAS, FLUIDS, AND RELATED INTERDISCIPLINARY TOPICS, AMERICAN INSTITUTE OF PHYSICS, NEW YORK, NY, US, Bd. 64, Nr. 6, 26. November 2001 (2001-11-26), Seiten 66613-1, XP002305574 ISSN: 1063-651X in der Anmeldung erwähnt

EP 2 102 695 B1

## Beschreibung

## Gegenstand der Erfindung

Es wird ein Verfahren und eine Anordnung zur mikroskopischen Bildgebung mit strukturierter Beleuchtung beschrieben. Dabei wird durch nichtlineare Probenwechselwirkungen, die aus dem Stand der Technik bekannt sind, eine erhöhte räumliche Auflösung erreicht. Das Verfahren und die entsprechende Anordnung lösen die Aufgabe, diese Probenwechselwirkung so für eine Bildgebung zu nutzen, dass eine konfokale Bildgebung mit über das Beugungslimit hinausgehender Auflösung in allen Raumrichtungen bei paralleler Datenakquisition möglich ist.

## Stand der Technik

Aus dem Stand der Technik sind verschiedene nichtlineare Probenwechselwirkungen bekannt, die bei geeigneter Implementierung zu einer erhöhten räumlichen Auflösung führen können. Genannt seien hier konkret:

> 1. Abregung des angeregten Niveaus durch stimulierte Emission (Stimulated Emission Depletion - STED), Klar and Hell, Opt.Lett. 24 (1999) 954-956
> 2. Entvölkerung des Grundzustandes durch Tripletbesetzung (Ground State Depletion-GSD), Hell and Kroug, Appl. Phys. B 60 (1995), 495-497
> 3. reversibles oder irreversibles Schalten des Farbstoffs zwischen einem fluoreszierenden und nicht fluoreszierenden, weniger fluoreszierenden oder durch andere Merkmale (wie andere Emissionswellenlänge) gekennzeichneten fluoreszierenden Zustand, Hell, Jakobs, and Kastrup, Appl. Phys. A 77 (2003) 859-860.

Das Grundschema der Verfahren besteht dabei darin, dass der Farbstoff in einer räumlich begrenzten Region entweder

> a) in einen nicht oder weniger fluoreszierenden Zustand versetzt wird, so dass eine nachfolgende Anregung nur oder dominant zu Fluoreszenz in einem begrenzten Gebiet führen kann (2. und 3.) oder
> b) nach vorhergehender Anregung abgeregt wird, so dass nur noch aus einer begrenzten Region Fluoreszenz erfolgt (1.).

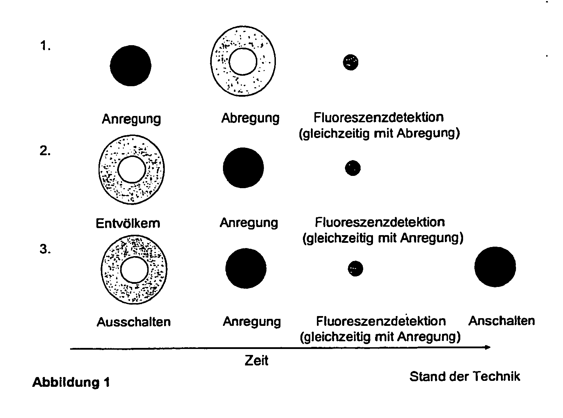

In beiden Fällen ist gemeint, dass die fluoreszierende Region kleiner ist als durch beugungsbegrenzte Anregung erreicht werden kann. Das Grundprinzip ist in Abb. 1 anhand der Schritte und der jeweils verwendeten bzw. resultierenden, schematisch dargestellten räumlichen Verteilungen illustriert. Die aus dem Stand der Technik bekannten Anordnungen basieren auf punktscannenden Verfahren, bei denen zum En-

tvölkern/Schalten/Abregen bevorzugt Lichtverteilungen mit Nullstellen im Zentrum (sogenannte Doughnut-Moden) zur Anwendung kommen. Dabei wird der Laserstrahl über die Probe gescannt und die in Abb. 1 dargestellten Schritte in jedem Raumpunkt sequentiell durchgeführt. Bisher sind Anordnungen nach 1. (u.a. Klar et al., PNAS 97 (2000), 8206-8210) und nach 3. (Hoffmann et al., PNAS 102 (2005), 17565-17569) beschrieben worden, die alle nach dem oben genannten Schema funktionieren. Ein entscheidender Nachteil dieser Anordnung ist die sequentielle Datenakquisition. Da die erhöhte räumliche Auslösung zu verringerten Anregungsvolumina führt, ist die Fluoreszenzemission verringert wodurch die Pixelintegrationszeit im allgemeinen größer sein muss (bei einer nur lateralen Auflösungssteigerung um das 5-fache ist z.B. bei einem über die Ausdehnung der beugungsbegrenzten Anregung homogenen Farbstoffverteilung eine etwa 25-fach geringere Fluoreszenzemission zu erwarten). Des Weiteren können einige der bekannten schaltbaren Farbstoffe wie Dronpa nur mit begrenzter Lichtleistung geschaltet werden, um viele Schaltzyklen zu ermöglichen (Habuchi et al., PNAS 102 (2005)9511-9516). Das Verfahren nach 3. erfordert daher in diesem Fall eine erheblich längere Belichtungszeit pro Pixel zum Ausschalten, als dies für Fluoreszenzanregung allein erforderlich ist. Es ist daher klar, dass eine parallele Datenakquisition notwendig ist, um auf akzeptable Bildaufbauzeiten zu kommen. Dabei ist zu beachten, dass eine konfokale Bildgebung erforderlich ist, um durch außerfokale Fluoreszenz nicht Kontrast und Auflösungsgewinn zu verlieren. Eine sich aus dem Stand der Technik ergebende Möglichkeit zur Parallelisierung ist die simultane Anregung mit mehreren Spots, von denen jeder durch eine doughnutförmige Beleuchtung in seinen Fluoreszenzeigenschaften modifiziert wird. Um eine Auflösungssteigerung zu erreichen, muß die doughnutförmige Beleuchtung aber zu einer nichtlinearen Probenwechselwirkung, i.a. eine Sättigung, führen. Dies heißt, dass ein relativ großes Gebiet um den einzelnen Spot mit dieser Lichtverteilung wechselwirkt, was nur eine geringe Dichte der Spots und daher eine geringe Parallelisierung erlaubt. Darüber hinaus ist eine konfokale Detektion in einer solchen Multispotanordnung technisch aufwändig.

Ein weiteres hochauflösendes Mikroskop ist aus der US 2001/0045523 A1 bekannt.

## Darstellung der Erfindung und ihrer Vorteile

Die Erfindung wird durch die Ansprüche 1 and 12 definiert.

Im Folgenden werden ein Verfahren und eine Anordnung beschrieben, bei dem direkt (ohne Bildverarbeitung) ein hochauflösendes Bild mit paralleler Datenakquisition erzielt wird. Durch variable konfokale Detektion kann der außerfokale Untergrund eliminiert werden. Dieses Verfahren und die Anordnung vermeiden die o.g. Nachteile der auf dem Stand der Technik basierenden Multispotanordnung. Insbesondere wird durch die erfindungsgemäße Realisierung eine optimale Parallelisierung (maximale Dichte der gleichzeitig angeregten Regionen der Probe) und ein technisch relativ einfache Implementierung ermöglicht.

**Grundprinzip**

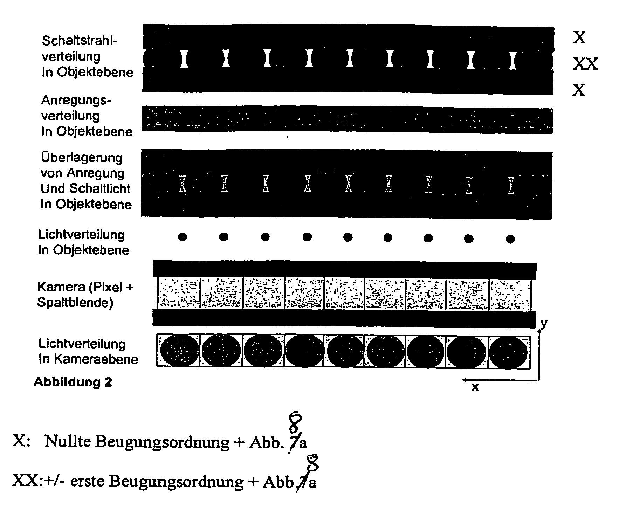

Eine Anordnung, die den o.g. Ansprüchen gerecht wird, basiert auf einer linienförmigen Anregung und konfokaler Detektion mittels einer Zeilenkamera hinter einer Schlitzblende. Durch ein geeignetes Belichtungsmuster in Kombination mit der nichtlinearen Probenwechselwirkung wird eine Abregung / ein Entvölkem / ein Schalten (im Folgenden beispielhaft immer Schalten genannt) so realisiert, dass entlang einer Linie nur ein Reihe von Spots Fluoreszenzlicht emittieren können. Der Abstand dieser Spots ist dabei mindestens so groß wie die beugungsbegrenzte Auflösung des optischen Systems (vorteilhafterweise aber nicht viel größer). Eine Möglichkeit zur Erzeugung einer solchen Beleuchtung (die gleichzeitig auch axial strukturiert ist) ist die Beugung kohärenten Lichts an einer periodischen Struktur und Interferenz der Beugungsordnungen in der Objektebene, wie in der Anmeldung DE102004034962A1 beschrieben. Auf der Kamerazeile ergeben sich dann beugungsbegrenzte, voneinander getrennte Lichtverteilungen, die auf entsprechende Pixel fallen und dort getrennt detektiert werden (siehe Abb. 2).

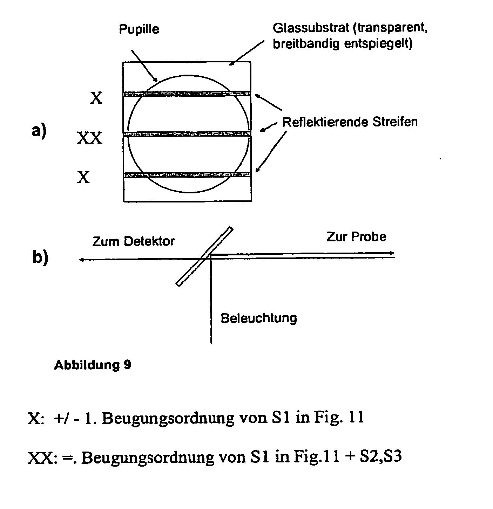

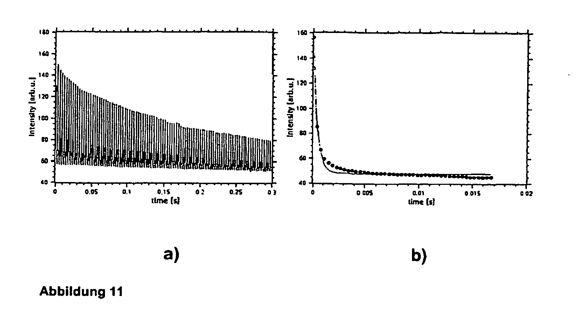

In Abb.2 untereinander dargestellt sind die Schaltstrahlverteilung in der Objektebene, die Anregungsverteilung in der Objektebene, die Überlagerung von Anregung und Schaltlicht in der Objektebene, die Kamerapixel und die Lichtverteilung in der Kameraebene.
Bei der Schaltstrahlverteilung bedeuten: X die nullte Beugungsordnung gemäß der Darstellung und Erläuterung in Abb. 9 a) und Abb. 11. XX: +/- erste Beugungsordnung gemäß der Darstellung und Erläuterung in Abb. 9 a) und Abb.11.

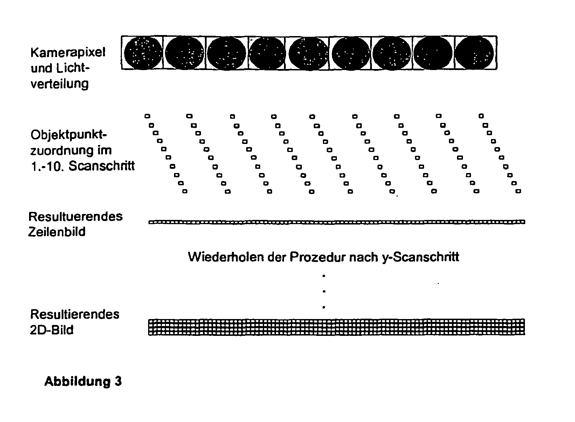

Durch ein Abtasten des Objektes entlang der Linie (x) bzw. senkrecht zur Linie (y) wird nun ein hochaufgelöstes Bild erhalten. Dieses Abtasten kann durch Bewegen der Beleuchtungsverteilungen z.B. mittels Galvanometerscanner oder/und durch Bewegen des Objektes erfolgen. Im ersteren Fall muss der Beleuchtungs- und der Detektionsstrahl über die gleichen Strahlablenkungselemente laufen, um eine stationäre Lichtverteilung auf dem Detektor zu erhalten (descannte Detektion). Im Fall einer reinen Objektbewegung (Objektscanning) sind die Lichtverteilungen in jedem Fall stationär.
Die Information über die Zuordnung von Pixel zu Messpunkt auf der Probe ergibt sich dabei eindeutig aus der Scanbewegung und der entsprechenden Optik. Dies sei im Folgenden genauer erläutert: durch die Abbildung der Kamerapixel auf die Probe ist das vom Detektor beobachtete Bildfeldraster festgelegt. Z.B. werden 512 Pixel so auf die Probe abgebildet, dass jedes Pixel eine Bildfläche vom 1,5-fachen der beugungsbegrenzten Auflösung detektiert (für ein Objektiv mit NA von 1,4 entspricht dies bei einer Wellenlänge von 488 nm einem Feld von 488 nm/(2*1,4)*1,5 = 260 nm Kantenlänge). Durch die Justage des Beleuchtungsmusters (Schaltlichtverteilung) wird sichergestellt, dass eine eindeutige Zuordnung von leuchtenden Spots in der Probe und Kamerapixeln besteht. Durch die Relativbewegung von Objekt und Beleuchtungsmuster werden nun verschiedene Probenpunkte abgebildet. Dabei muss die Scanbewegung und die dazu synchronisierte Detektion der Spotgröße in der Probe angepasst sein. Typischerweise wird eine Abtastung mit der Hälfte des Spotdurchmessers erfolgen (Nyquist-Theorem). Wenn also in dem o.g. Beispiel durch die nichtlineare Probenwechselwirkung eine 5-fache Auflösungssteigerung (N=5) erzielt wird, so muss eine Probenabtastung mit einem Abstand von 260 nm /(5*2) = 26 nm erfolgen. Um eine Zeile vollständig abzuscannen sind daher N*2 Scan-/Detektionsschritte nötig (im obigen Beispiel 10). Aus 512 Pixeln in x-Richtung werden daher 512*2*N hochaufgelöste Datenpunkte (siehe Abb. 3).

In Abb.3 sind untereinander dargestellt: Kamerapixel und Lichtverteilung, Objektpunktzuordnung im 1.-10. Scanschritt, resultierendes Zeilenbild und resultierendes 2D-Bild nach einem Y-Scanschritt.

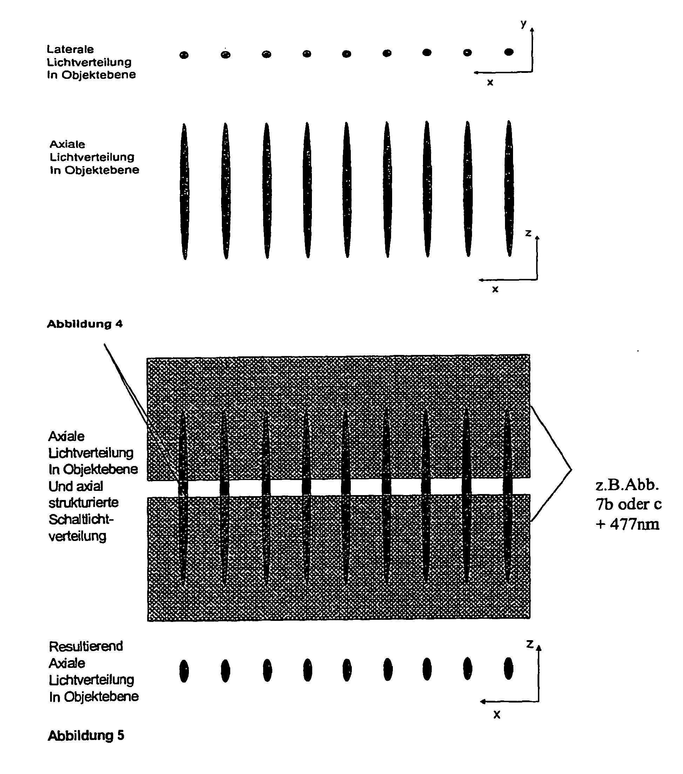

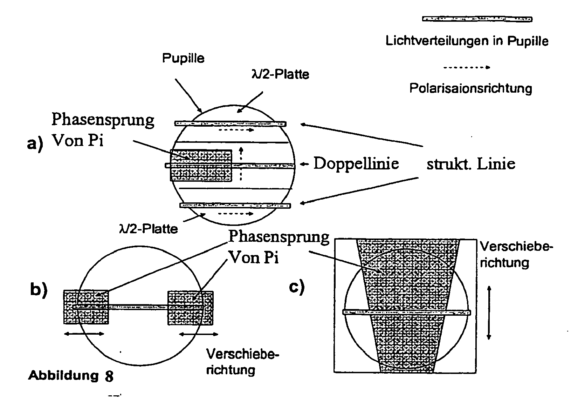

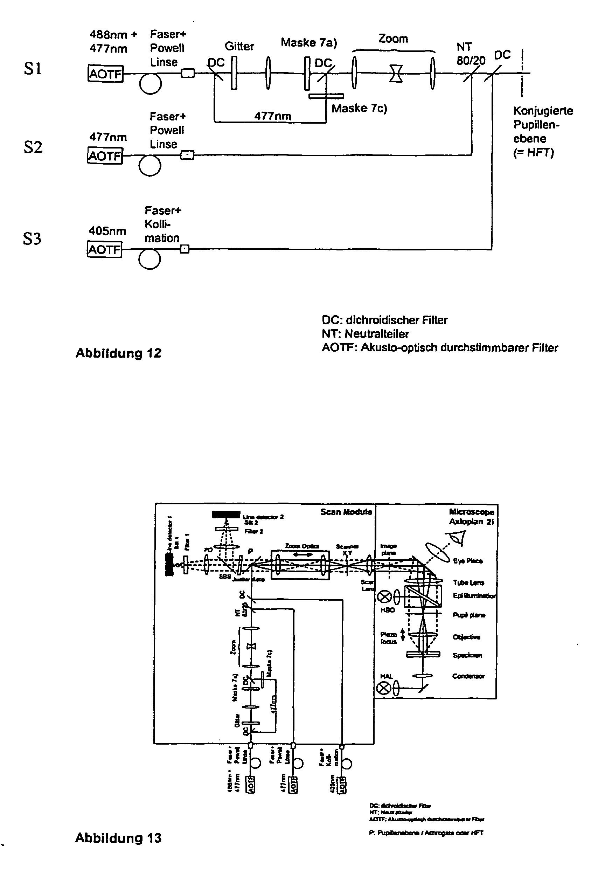

Die bisherigen Betrachtungen beschränkten sich auf eine Objektebene. Objekte sind aber immer drei-dimensional. Das hat mehrere Konsequenzen. Zum einen wird neben der Fluoreszenz im Fokus mit erhöhter Auflösung auch Fluoreszenz außerhalb des Fokus angeregt. Diese Fluoreszenz stört die oben beschriebene Bildgebung und kann eine Zuordnung von Pixel zu hochaufgelöstem Objektpunkt unmöglich machen. Hier hilft eine konfokale Detektion, die außerfokales Fluoreszenzlicht wirksam unterdrückt. Im hier diskutierten Fall wird diese durch eine idealerweise variable Spaltblende vor der Kamera parallel zur Zeile realisiert. Zum anderen ist für die Bildgebung die drei-dimensionale Point Spread Function (PSF) zu berücksichtigen. Diese wird neben der Anregungs- und Detektions-PSF von der Schaltlichtverteilung abhängen. In axialer Richtung kann die PSF eine Ausdehnung haben, die der beugungsbegrenzten PSF entspricht (strukturiertes Schaltlicht nur in lateraler Richtung). Abb. 4 zeigt die laterale (X/X) sowie axiale (optische Achse Z) Lichtverteilung in der Objektebene Durch eine weitere Strukturierung des Schaltlichts in axialer Richtung lässt sich aber auch eine axiale Auflösungssteigerung erzielen (Abb. 5). In Abbildung 5 ist schematisch die axiale Lichtverteilung, die ohne axial strukturiertes Schaltlicht entstehen würde, zusammen mit der axialen Strukturierung des Schaltlichtes eingezeichnet. Die Schaltlichtverteilung resultiert z.B. aus der Verwendung eines optischen Elements aus Abb. 8 b) oder c) in einer Anordnung nach Abb. 12 (inklusive dazugehöriger Beschreibungen). Die in diesem Fall tatsächlich erhaltene Lichtverteilung ist in Abb. 5 unten gezeigt. Je nach Applikation kann eine Verteilung wie in Abb. 4 unten oder wie in Abb. 5 unten sinnvoll sein. Es ist daher zweckmäßig, in einem Gerät beide Situationen realisieren zu können

Im Prinzip lassen sich alle obigen Betrachtungen auch auf eine zweidimensionale strukturierte Schaltstrahlverteilung und Detektion mit einem Flächendetektor übertragen. In diesem Fall erfolgen die Anregung und das eventuell notwendige Anschalten mit flächiger Beleuchtung (im Weitfeld). Eine solche Anordnung hätte den Vorteil erhöhter Parallelität (z.B. könnten $512^2$ Punkte gleichzeitig belichtet werden), aber auch den Nachteil nicht-konfokaler Detektion. Das Auftreten außerfokaler Fluoreszenz kann dabei je nach Probe (insbesondere bei dicken, stark gefärbten Proben) ein gravierendes Problem darstellen.

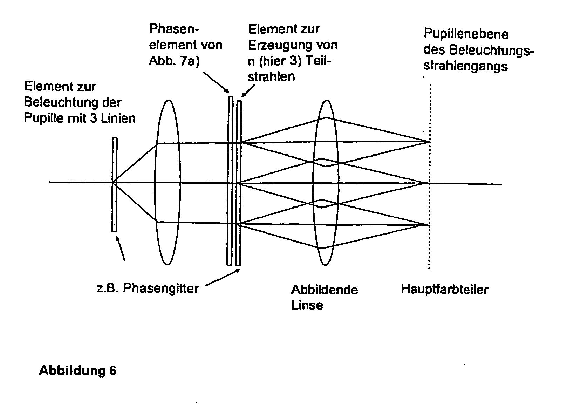

Eine Option zur Nutzung erhöhter Parallelität bei gleichzeitiger Wahrung einer gewissen Konfokalität der Abbildung besteht in der Abbildung mehrerer, voneinander separierter Linien auf die Probe und der Detektion durch einen Flächendetektor. Wenn die Linien auf dem Flächendetektor ausreichend separiert sind (z.B. etwa 10 Pixel), kann durch ein selektives Auslesen der den Linien zugeordneten Pixel eine konfokale Detektion erreicht werden. Über eine Berücksichtigung auch benachbarter Pixel kann die Konfokalität eingestellt werden. Z.B. bedeutet das Auslesen der zwei der Linie benachbarten Pixelzeilen und das Aufsummieren der entsprechenden zugeordneten Pixelelemente eine Vergrößerung der effektiven "Spanende" um den Faktor 3, verbunden mit einer entsprechenden Verringerung der Konfokalität. Im Beleuchtungsstrahlengang können für eine solche Anordnung die gleichen, in der Nähe der Pupille befindlichen Elemente wie in Abb. 8 und Abb. 9 gezeigt benutzt werden. Allerdings muss durch ein dem Hauptfarbteiler vorgeschaltetes Element eine Aufspaltung des Lichtes in n Teilstrahlen erfolgen, die in der Pupille unter verschiedenem Winkel auftreffen. Dies resultiert in n voneinander separierten Linien in der Objektebene, wobei jede Linie in der in Abb. 4 und Abb. 5 gezeigten Weise geformt ist. Ein o.g. dem Hauptfarbteiler vorgeschaltetes Element kann ein geeignet geformtes diffraktives Element (oder die Kombination von mehreren Elementen) mit entsprechender Abbildung oder eine Anordnung zur geometrischen Aufspaltung und Strahlumlenkung der Teilstrahlen sein. Ein Beispiel dafür ist in Abb. 6 gezeigt, wobei hier übersichtshalber die Aufspaltung in nur n = 3 Linien gezeigt ist.

**Bevorzugte Anordnung**

Eine bevorzugte Anordnung nutzt ein modifiziertes linienscannendes System wie in Abb. 7 dargestellt und beispielsweise in DE 10257237A1, EP1617271 A2 beschrieben.

Die Modifikationen betreffen dabei die folgenden Aspekte:

1. Ersatz des achromatischen Farbteilers Achrogate durch einen solchen, der eine Strukturierung des Schaltlichtes in der Objektebene zulässt - dies kann eine geeignete achromatische Auslegung oder ein dichroitischer Strahlteiler sein

2. Ersatz der Beleuchtungseinheit durch eine solche, die die erforderlichen nichtlinearen Probenwechselwirkungen und die Strukturierung des Schaltlichtes ermöglicht

3. Anpassung der Beleuchtung und der Datenakquisition in solcher Art und Weise, dass die Belichtung der Probe und die Detektion mit der geeigneten Sequenz von Schalten/Anregen/Detektion/Anschalten (siehe Abb.1) in geeigneter zeitlicher Länge erfolgt

4. Anpassung der Datenauswertung, so dass eine Zuordnung von Pixeln zu Objektpunkten wie in Abb. 3 schematisch dargestellt, erfolgt.

**Strukturierung des Schaltlichtes**

Eine bevorzugte Form der Erzeugung einer lateralen Strukturierung ist mit einer Phasenmaske nach Abbildung 8 a) möglich, die in der Nähe der Pupille des Objektivs abgebildet werden sollte. Hier sei auf den Strahlengang in Abb. 12 verwiesen. Die Maske ist in der Mitte geteilt wobei die rechte und die linke Hälfte unterschiedliche Phasenverschiebungen des hindurchtretenden Lichts hervorrufen. Eine Doppellinie - wie in Abb. 2 oben dargestellt - wird hierbei durch einen Phasensprung von n für die Hälfte der mittleren Linie erzielt. Eine sinusförmige Modulation der Linie im Zwischenraum der Doppellinie (um eine Modulation der Anregung im Zwischenraum der Doppellinie zu erzeugen, siehe Abb. 2 oben) wird durch die Interferenz der beiden Linienverteilungen am Rand der Pupille erzeugt. Um z.B. eine Modulation der Linie bei 2/3 der Grenzfrequenz zu erzielen müssen die Linien einen Abstand von 2/3 des Durchmessers des Pupillenradius aufweisen. Es ist wichtig, dass die Komponenten des Lichtes, die die Doppellinie erzeugen, und diejenigen, die die modulierte Mittellinie erzeugen, in der Probe inkohärent überlagern. Dies kann durch ein zeitliches Delay der Ankunft der entsprechenden Lichtkomponenten im Objekt größer als die Kohärenzlänge gesichert werden. Bevorzugt wird aber einfach die Polarisation der Lichtkomponenten orthogonal zueinander eingestellt, wie in Abb. 8 schematisch mit Pfeilen verdeutlicht. Dies kann z.B. mittels λ/2-Platten geschehen, die selektiv das Licht im äußeren Bereich der Pupille drehen (siehe Abb. 8). Um eine Verteilung des Lichtes auf der Phasenmaske wie in Abb. 8 a) gezeigt zu erhalten, kann man ein geeignetes Phasengitter in die Nähe einer konjugierten Bildebene vor der Maske verwenden. Die zentrale Linie entspricht dann der 0. Beugungsordnung und die beiden Linien am Rand der Pupille den 1. Beugungsordnungen des entsprechenden Gitters. Durch die Verwendung von Beugungsordnungen eines Gitters wird zugleich die optimale Lage der Lichtverteilungen in der Objektebene zueinander sichergestellt. Aufgrund der durch die oben beschriebenen Maßnahmen erzielten Inkohärenz der 1. Beugungsordnungen relativ zur 0. Beugungsordnung wird auch gesichert, dass trotz kohärenter Beleuchtung eine Modulation der Mittellinie in der Objekteebene bis zur Grenzfrequenz der Abbildung von inkohärentem Licht (die doppelt so groß ist wie bei Abbildung mit kohärentem Licht) möglich wird. Eine weitere Konsequenz besteht darin, dass im Gegensatz zu der in DE102004034962A1 beschriebenen Anordnung keine Strukturierung des Lichts in axialer Richtung erfolgt. Ist eine Strukturierung des Schaltlichtes auch axial - wie in Abb. 5 oben schematisch dargestellt - gewünscht, so wird ein weiterer Teilstrahl des Schaltlichtes mit einer Phasenmaske nach Abb. 8 b), die sich in die Nähe einer zur Objektivpupille konjugierten Ebene befindet, modifiziert.

Die Masken 8b) und 8c) weisen symmetrisch zur optischen Achse und zu einer Achse senkrecht zur optischen Achse eine mittlere Region auf, die im Vergleich zu den Aussenregionen rechts und links eine unterschiedliche Phasenverzögerung des hindurchtretenden Lichts hervorruft. Hierbei erfolgt eine Phasenverzögerung von $\pi$ eines äußeren im Vergleich zu einem inneren Teil der linienförmigen Pupillenbeleuchtung. Der optimale Radius des Phasensprungs ist dabei theoretisch $1/\sqrt{2}$ des Pupillenradius des Objektivs. In Praxis ist oft ein etwas kleinerer Radius optimal. Zur optimalen Anpassung des Radius ist eine Phasenplatte wie in Abb. 8 c) dargestellt geeignet, bei der durch Translation eine Radiusanpassung erfolgen kann.

Ein sich aus den Pupillenlichtverteilungen in Abb. 8 ergebender achromatischer Farbteiler, der auch mit den Verteilungen für die Anregung und das Anschalten (Linien) kompatibel ist, ist in Abb. 9 a) gezeigt. Dieser befindet sich wie in Abb. 9 b) dargestellt im Strahlengang in einer konjugierten Pupillenebene. Das von der Probe emittierte Fluoreszenzlicht füllt die Pupille aus und passiert daher (außer an den reflektierenden Streifen) den Teiler. Die äußeren Spiegelflächen (X) werden zur Übertragung der +/- 1. Beugungsordnung von S1 in Abb. 11 verwendet, die innere Spiegelfläche (XX) zur Übertragung der 0. Beugungsordnung von S1 in Abb. 12 sowie der Strahlengänge S2, S3. Zu beachten ist gegebenenfalls, dass die Spiegelflächen nicht alle in der gleichen Fokusebene liegen. Falls der Rayleighbereich des in diese Ebene fokussierten Lichts kleiner als die Fokusablage der äußeren Spiegelflächen ist, muss der Defokussierung durch Vergrößerung der äußeren (nicht im Fokus befindlichen) Spiegelflächen im Vergleich zur inneren Spiegelfläche Rechnung getragen werden.

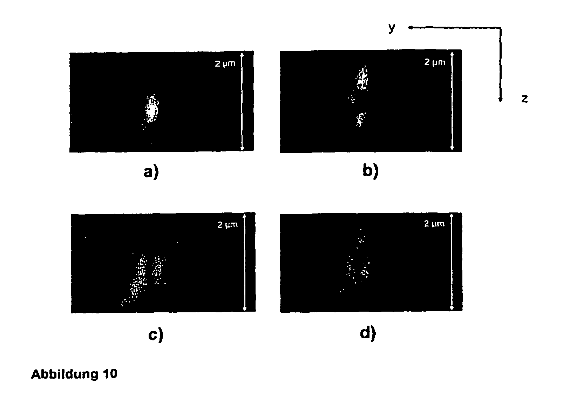

In Abbildung 9 sind experimentelle Ergebnisse (Schnitte durch die Lichtverteilungen in der Probe) mit den entsprechenden Masken mit einem Ölimmersionsobjektiv mit einer numerischen Apertur (NA) von 1,4 bei 488 nm gezeigt. Abb. 10 a) zeigt die Verteilung ohne Maske (entspricht Anregungsverteilung), b) die mit einer Maske nach Abb. 8 b) und c) die mit einer Maske nach Abb. 8 a) (nur zentraler Teil). Eine inkohärente Überlagerung ergibt schließlich die in Abb. 10 d) gezeigte Verteilung die eine in y- und z-Richtung umschlossenes Minimum zeigt. Dieses Minimum hat eine Ausdehnung von etwa 170 nm (y) bzw. 400 nm (z), was in etwa dem Inversen der beugungsbegrenzten Grenzfrequenzen entspricht (lateral: $\lambda/(2 \cdot NA) \approx 170nm$, axial:

$$\lambda / \left( n - \sqrt{n^2 - NA^2} \right) \approx 520nm\, ).$$

Das in der Probe im Fokus entstehende Punktmuster von Intensitätsminima verursacht durch eine entsprechende nichtlineare Probenwechselwirkung ein Punktmuster von anregbaren Bereichen (GSD/Schalten) bzw. von Bereichen, in denen noch nennenswerte Anregung vorhanden ist (STED). Diese Bereiche sind nach geeigneter, für den Farbstoff optimierter Belichtung (Wellenlänge, Intensität, Belichtungszeit) deutlich kleiner als eine beugungsbegrenzte Lichtverteilung und erlauben daher ein Abtasten der Probe mit erhöhter Auflösung. Die Einstellung der Beleuchtung erfolgt auf der Basis der Kenntnis des Farbstoffs und kann anhand der Auflösung von Teststrukturen (z.B. Beads) am Gerät optimiert werden. Da dieses Punktmuster genau auf die Pixel der Linienkamera abgebildet werden muss ist im Beleuchtungs- oder Detektionsstrahlengang vorteilhaft ein variables optisches System (Zoom) vorzusehen, welches die Anpassung der Periode des Musters an die Periode der Detektorelemente möglich macht. Durch ein weiteres Element wie eine kippbare, dicke Glasplatte im Beleuchtungs- oder Detektionsstrahlengang kann die Lage der abgebildeten Spots (d.h. ihr Schwerpunkt) innerhalb der Pixel zentriert werden ( siehe z.B. DE102004034960A1)

**Anregung und Anschalten**

Die Anregung und das Anschalten erfolgen mit beugungsbegrenzten Lichtverteilungen, die ohne Maske erzeugt werden. In der bevorzugten Anordnung sind das Linien, die entlang der Linie einen möglichst homogenen Intensitätsverlauf aufweisen und senkrecht zur Linie eine beugungsbegrenzte Ausdehnung besitzen. Die Anregung erfolgt zeitlich entweder vor dem Schalten/ Abregung (STED) oder nach dem durch das Schaltlicht in strukturierter Art und Weise der Farbstoff ausgeschaltet/geblichen wurde (GSD/Schalten). Nur im Falle des Schaltens ist im Allgemeinen eine anschließende Umkehrung des Ausschaltens durch einen Anschaltlaser erforderlich, da die anderen Prozesse spontan wieder zum Ausgangszustand des Farbstoffs zurückführen (siehe auch Abb. 1 bezüglich der zeitlichen Abfolge). Falls gepulste Laser verwendet werden (was bei STED im Allgemeinen erforderlich ist), kann die zeitliche Abfolge durch ein Delay der entsprechenden Teilstrahlen erreicht werden. Bei Verwendung von kontinuierlich emittierenden (cw) Lasern muß die zeitliche Abfolge durch schnelle Schalter (bevorzugt AOTF's) erreicht werden. Die optimalen Parameter für die Anregung und das Anschalten werden aus einer Kenntnis der Farbstoffeigenschaften vorab bestimmt. Für das Anschalten wird eine möglichst vollständige Umkehr des Ausschaltens angestrebt, die Optimierung von Anregung und gleichzeitige Detektion des emittierten Fluoreszenzsignals wird unter Maximierung des Signal-zu-Rausch-Verhältnisses erfolgen. Hierbei sind für die verschiedenen Wechselwirkungsmechanismen verschiedene Randbedingungen zu beachten:

● Bei STED kann nur die nach Anregung und anschließender Abregung verbliebene Zahl angeregter Moleküle zur Fluoreszenz beitragen. Eine über die einmalige Emission dieser Moleküle hinausgehende Detektion von Photonen erfordert die Wiederholung des Prozesses (Anregung - Abregung - Fluoreszenzdetektion).

● Im Fall von GSD kann nur solange angeregt und die resultierende Fluoreszenz detektiert werden, bis die Moleküle spontan aus dem Tripletniveau zurückgekehrt sind. Das ist ein vergleichsweise kurzer Zeitraum in der Größenordnung von 1 $\mu$s.

● Beim Schalten von Farbstoffen sind in einigen Fällen Anregungs- und Schaltwellenlänge identisch. Falls dieses Schalten das Ausschalten des Farbstoffs ist (wie bei Dronpa), muss während des gezielten Schaltens mit der Schaltlichtverteilung die Detektion von Fluoreszenzphotonen verhindert oder von der Detektion der Photonen aus dem räumlich begrenzten Gebiet getrennt werden. Darüber hinaus kann nur bis zum Ausschalten des Farbstoffs auch im räumlich begrenzten Gebiet Fluoreszenzsignal detektiert werden. Anderenfalls liegen keine weiteren Beschränkungen vor, solange der Farbstoff stabil im ausgeschalteten Zustand bleibt. Selbst eine Übereinstimmung von Anregungswellenlänge und Wellenlänge zum Anschalten des Moleküls (bekannt z.B. für das Protein asFP585, Hoffmann et al., PNAS 102 (2005), 17565-17569) stellt solange kein Problem dar, wie die Fluoreszenzanregung effizienter als der Schaltprozess ist und die Anregungs- und Schaltleistungen sowie Belichtungszeiten entsprechend angepasst werden.

In einer Probe werden im Allgemeinen nicht alle lichtemittierenden Moleküle an der nichtlinearen Probenwechselwirkung (STED / Schalten / GSD) teilnehmen. Dies führt zu einem Untergrundsignal, das nicht der nichtlinearen Strahlformung unterliegt, und so die erreichbare Hochauflösung beschränkt. Im Falle von langlebigen (d.h. ca. > 1 $\mu$s) Zuständen wie bei GSD und Schalten kann durch eine weitere Aufnahme vor dem Wiederanschalten (Schalten) bzw. der spontanen Relaxation in den Grundzustand (GSD) ein Maß für die Größe des Untergrunds relativ zu dem Signal von Molekülen, die an der nichtlinearen Probenwechselwirkung teilgenommen haben, gefunden werden. Dies kommt deshalb zu Stande, da die unstrukturierte Anregung (S2, Abb.11) z.B. bei Photoschaltern wie Dronpa zusätzlich zur Fluoreszenzanregung ebenfalls zum Ausschalten der Dronpa-Moleküle führt (analog führt die Anregung bei GSD ebenfalls zu einer Besetzung des Triplettzustand). Bei einer weiteren (unstrukturierten) Anregung und Detektion leuchten deshalb nur noch Moleküle, die nicht dem Photoschaltprozess (bzw. GSD) unterliegen. Bei schaltbaren Molekülen, bei denen die Fluoreszenzanregung zum Anschalten des Moleküls führt (wie bei asFP, Hoffmann et al., PNAS 102 (2005), 17565-17569) ist das Vorgehen ähnlich. Allerdings muss hier in einem zusätzlichen Schritt der Farbstoff zunächst unstrukturiert ausgeschaltet und danach die durch unstrukturierte Beleuchtung angeregte Fluoreszenz detektiert werden.

**Beispiel: Schalten des Proteins Dronpa**

Ein geeigneter Kandidat für das Schalten ist das Protein Dronpa (Habuchi et al., PNAS 102 (2005)9511-9516). Hier erfolgt das Ausschalten und die Anregung mit einer Wellenlänge im Bereich von etwa 450 nm bis 520 nm. Das Anschalten kann im Bereich 350 nm bis 420 nm erfolgen. Dies ermöglicht, z.B. mit den Linien des Argonlasers bei 477 nm und 488 nm zu arbeiten und eine Laserdiode bei 405 nm zum Anschalten zu verwenden. Das wechselseitige An- und Ausschalten zeigt Abb. 11 a). Eine Detailansicht des Ausschaltens ist in Abb. 11 b) wiedergegeben. Diese verdeutlicht die langen Belichtungszeiten von ca. 5 ms, um ein ausreichendes Ausschalten zu erzielen. Zwar kann man durch Erhöhung der Intensität die Belichtungszeit verkürzen, dies führt aber zu einer Verringerung der möglichen Schaltzyklen im Vergleich zu Abb. 11 a), wo etwa 100 Schaltzyklen gezeigt sind.

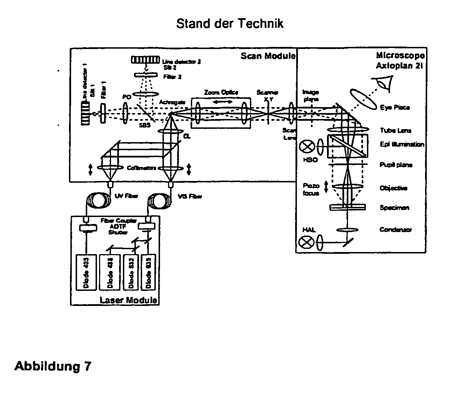

Eine schematische Darstellung einer bevorzugten Beleuchtungseinheit für ein Laser Scanning Mikroskop für den Einsatz von Dronpa zeigt Abb. 12. S1 ist hier der Strahlengang zum Erzeugen der Schaltlichtverteilung (siehe Abb. 2, 7 und 5). Ein Anschalten des Farbstoffes erfolgt hier entweder vor dem Ausschalten oder nach der Anregung. S2 ist der Anregungsstrahlengang, S3 ist ein weiterer Strahlengang zum ggf. notwendigen Anschalten eines abgeschalteten Farbstoffes. Zuerst wird also S1 (Ausschalten), dann S2 (Anregung) erfolgen und S3 (Anschalten) entweder ganz vorher oder ganz danach, wobei hier bei S2 die Detektion erfolgt. Die Wellenlänge 477nm bei S2 kann auch durch eine andere Anregungswellenlänge (z.B. 488nm) ersetzt werden.

STED und GSD (siehe Einleitung) können mittels S1, S2 realisiert werden, STED durch S2 gefolgt von S1 und Detektion bei S1, GSD durch S1 gefolgt von S2 und Detektion bei S2.

In S1 werden nach der Strahlformung (z.B. mittels einer Powell-Linse) und Durchgang durch einen Teiler DC in der 0. Beugungsordnung eines Gitters mit der nachfolgenden Maske 7 a) (Phasensprung) die beiden lateral begrenzenden Außenlinien der Schaltstrahlung in der Probe und mittels der +/- ersten Beugungsordnung die Strukturierung der mittleren Linie erzeugt.

Die Maske 7 b) oder c) (nach Reflektion am Teiler DC und separatem Strahlengang bis nach der Maske 7c)) erzeugt durch den beschriebenen Phasensprung die begrenzenden Linien der Schaltstrahlung in axialer Richtung.

Für die Strahlengänge durch 7 a) und 7 c) können leicht unterschiedliche Wellenlängen (hier 488 nm, 477 nm) verwendet werden, die jedoch beide im Bereich des Ansprechverhaltens des jeweiligen Farbstoffes liegen müssen.

Die Integration einer erfindungsgemäßen Beleuchtungseinheit in ein linienscannendes Mikroskop ist in Abb. 13 gezeigt. Dieses enthält im Detektionsstrahlengang die oben genannte Justierplatte zur Positionierung der Spots auf der Zeile der Detektoren. Ein weiterer Zoom im System dient der Einstellung der Abbildung der beleuchteten Linie im Objekt auf die Zeilendetektoren. So kann ein ausgewählter Teil der Linie auf die Zeilendetektoren abgebildet werden. Durch das Wechselspiel beider Zooms muss in jedem Fall die eindeutige Zuordnung von Beleuchtungsspots und Kamerapixeln gesichert werden.

Um ein flexibles System für das Schalten weiterer Farbstoffe (auch simultan zu Dronpa) zu erhalten, sind die Ankopplung weiterer Laser und die Auslegung der dichroidischen Teiler DC für mehrere Farben (oder als Neutralteiler) vorzusehen. Darüber hinaus kann es notwendig sein (je nach Wellenlängendifferenz) die Masken zu wechseln (was dann allerdings kein simultanes Arbeiten erlauben würde).

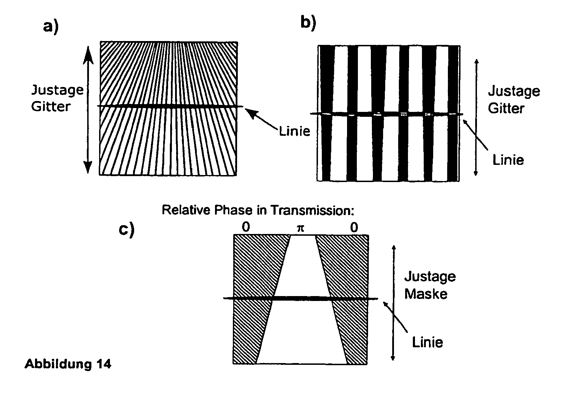

Eine einfache Anpassung ist die Änderung der Gitterkonstante, so dass die Beugungsordnungen an derselben Stelle in der Pupille auftreffen. Dies kann durch eine Translation eines Gitters wie in Abb. 14 a) gezeigt realisiert werden. Bei moderaten Wellenlängenänderungen (in der Größenordnung von 5%) können die Masken auch simultan mit mehreren Wellenlängen verwendet werden. Auch bei Verwendung einer Wellenlänge gibt es die Notwendigkeit von Einstellmöglichkeiten im System, die sich z.B. aus der Verwendung verschiedener Objektive ergibt. Eine Grundanpassung der Beleuchtung an die verschiedenen Pupillen der Objektive erfolgt dabei durch das Zoom-System unmittelbar nach dem Hauptfarbteiler (Abb. 8). Eine weitere spezifische Anpassung ist die relative Aufteilung der Intensität in den Beugungsordnungen, die sich aus verschiedenen Verlusten der Ordnungen bei Objektivwechsel ergeben kann. Darüber hinaus ermöglicht sich dadurch eine objektspezifische Adaption. Eine bevorzugte Form der Anpassung zeigt Abb. 14 b) durch Veränderung des wirksamen Stegverhälnisses am Gitter bei konstanter Gitterkonstante. Besonders kritisch für die optimale Strukturierung in axialer Richtung ist die Anpassung des Radius des Phasensprungs der Maske in Abb. 8 b). Eine Feinoptimierung dieses Radius z.B. anhand der Aufnahme von PSF mit den zu verwendenden Objektiv ist mit einer Maskenauslegung wie in Abb. 12 c) gezeigt möglich. Durch Translation der Maske lässt sich der wirksame Radius der Phasenkante anpassen.

### Simulation der Intensitätsverteilung für Dronpa

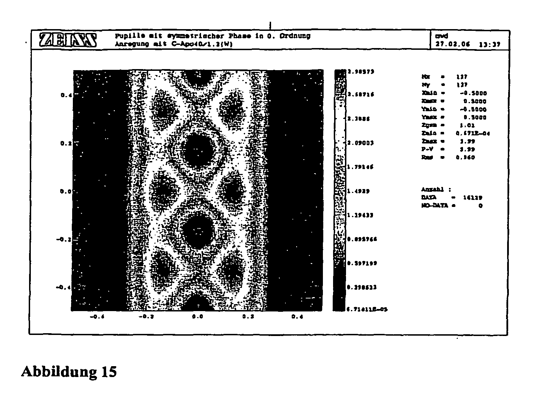

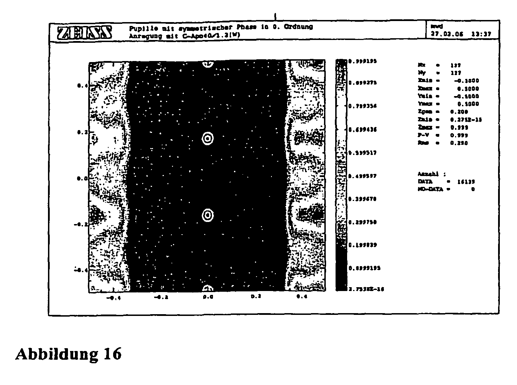

In Abb. 15 ist die Intensitätsverteilung der Beleuchtung in der Objektebene unter Verwendung der Phasenmaske aus Abb. 8 a) dargestellt
Die Anzahl n der angeregten Moleküle nimmt exponentiell mit der Beleuchtungsintensität und der Belichtungsdauer ab. Abbildung 16 zeigt am Bsp. Dronpa die resultierende Molekülpopulation im angeregten Zustand bei gesättigtem Ausschalten, die ja ein Maß für die PSF darstellt.

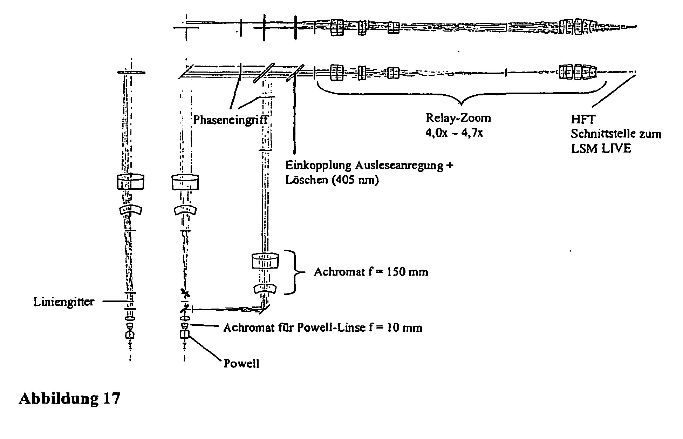

### *Ein detailliertes optisches Ausführungsbeispiel zeigt Abb.17*

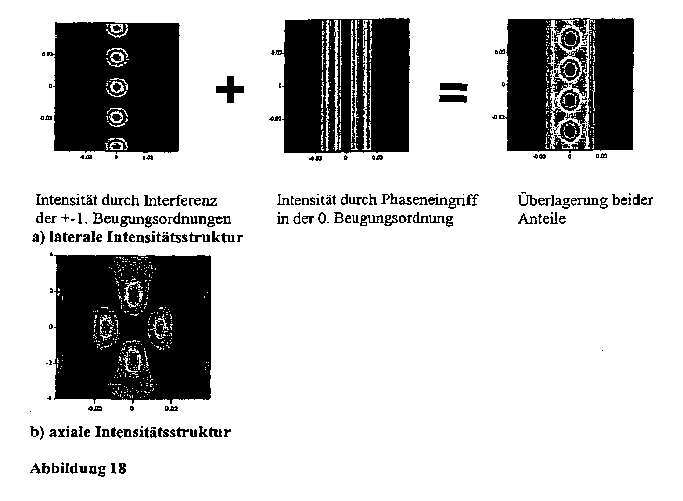

In Abb. 17 ist ein Ausführungsbeispiel der Beleuchtung gezeigt. Links und oben sind Seitenansichten des Strahlenganges zu sehen.
Mittels Faserkopplung wird ein einer Powell-Linse angepasstes Lichtbündel mit Gaussschem Intensitätsprofil bereitgestellt. Das Lichtbündel besteht aus 2 Wellenlängen, 477nm und 488 nm. Die Powell-Linse (Divergenz 30°) erzeugt in der Brennebene des nachfolgenden Achromaten mit 10mm Brennweite eine linienförmige Ausleuchtung mit homogener Intensitätsverteilung entlang der Linie. Diese Ebene ist zur Objektebene des Mikroskops konjugiert. Ein erster Farbteiler trennt die beiden homogenisierten Laser-Linien. Ein Lichtpfad, vorteilhaft der mit 488 nm, weißt ein Liniengitter mit 55 l/mm auf, das 0. und $\pm 1$. Beugungsordnungen in einem bestimmten Intensitätsverhältnis von 8:1 erzeugt. Diese werden mittels einer 2f-Abbildung mit 150 mm Brennweite auf ein Phasenelement abgebildet, das sich in einer zur Mikroskoppupille konjugierten Ebene befindet. Das Phasenelement ist in Abbildung 8 a) beschrieben. In der Objektebene bewirkt dieses Phasenelement eine Intensitätsstruktur gemäß Abb. 18 a). Das Gitter ist vorteilhaft als Phasengitter ausgebildet. Zur genauen Einstellung des Intensitätsverhältnisses zwischen 0. und 1. Beugungsordnung weißt das Gitter eine variable Furchentiefe auf wie in Abb. 14 b) gezeigt. Da die Ausleuchtung des Gitters linienförmig ist, kann durch laterale Verschiebung des Gitters die Effizienz der Beugungsordnungen eingestellt werden. Der zweite Lichtpfad besteht nur aus der gleichen 2f-Abbildung wie der erste, aber ohne Gitter. Der Phaseneingriff in der Pupille des zweiten Lichtpfades ist mit einer Phasenmaske gemäß Abbildung 8 c) realisiert. Damit ist eine axiale Strukturierung des Beleuchtungslichtes in der Objektebene möglich (Abb. 18 b)). Die laterale Ausdehnung der Masken beträgt etwa 12 x 12 mm$^2$. Die Beugungsordnungen im ersten Lichtpfad liegen bei -4 mm, 0 mm und 4 mm. Mit einem Strahlvereiniger werden nach diesen Eingriffen beide Lichtpfade wieder zusammengeführt. Mittels einer Relayoptik wird die Beleuchtungspupille an die Pupille des Mikroskops angepasst. Die Schnittstelle ist der Hauptfarbteiler. Der Abbildungsmaßstab der Relayoptik beträgt 4,35. Die Variabilität der Relayoptik dient der Feinjustage des Abbildungsmaßstabes. Nach dem Strahlvereiniger befindet sich ein Neutralteiler, der der Einkopplung des Lichtes zur Fluoreszenzanregung (477 nm) und auch des Lichtes zum Löschen der in das Objekt eingeprägten Struktur (405 nm) dient.

**Patentansprüche**

1. Verfahren zur parallelisierten Bildgebung in einem Scan mikroskop,
   wobei eine Probe scannend durch eine linienförmig ausgebildete Beleuchtung in mindestens einer Region durch einen ersten Laser zur Fluoreszenz angeregt wird und das Probenlicht mit einem mindestens in einer Richtung ortsauflösenden Detektor konfokal detektiert wird
   und über eine zweite über ein Gitter strukturierte Laserbeleuchtung durch Abregen (Entvölkern) und/oder Schalten des Fluoreszenzzustandes der Probe eine Unterteilung der fluoreszierenden Region in fluoreszierende Teilregionen erfolgt **dadurch gekennzeichnet dass**
   mindestens in Richtung der optischen Achse durch mindestens eine in einer Objektivpupille oder zu dieser konjugierte Ebene angeordnete Phasenmaske mit einem in ihrer Mitte und / oder in einem symmetrischen Randbereich angeordneten Phasensprung in der ersten Beugungsordnung des Gitters begrenzende Linien zur Begrenzung der Ausdehnung des detektierten Probenlichts erzeugt werden.

2. Verfahren nach Anspruch 1, wobei auch in lateraler Richtung begrenzende Linien erzeugt werden.

3. Verfahren nach einem der vorangehenden Ansprüche,
   wobei die Reduktion der Ausdehnung der Telregionen durch nichtlineare Wechselwirkungen der zweiten Beleuchtung mit mindestens einer in der Probe vorhandenen, fluoreszenzfähigen Substanz erfolgt, **dadurch gekennzeichnet dass**:

   a) eine Abregung eines angeregten Niveaus durch stimulierte Emission (STED) und/ oder
   b) ein Entvölkerung eines Grundzustandes durch Tripletbesetzung (GSD) und/ oder
   c) ein reversibles oder irreversibles optisches Schalten der mindestens einen fluoreszenzfähigen Substanz aus einem Zustand mit ersten Eigenschaften der Fluoreszenz in einen Zustand mit zweiten Eigenschaften der Fluoreszenz oder verringerter Fluoreszenz erfolgt.

4. Verfahren nach Anspruch 3,
   wobei durch eine optische Abbildung der von den genannten Teilregionen emittierten Fluoreszenz auf den Detektor eine eindeutige Zuordnung der Teilregionen zu den Detektorelementen erfolgt.

5. Verfahren nach einem der vorangehenden Ansprüche,
   wobei die Zuordnung der Teilregionen zu den Detektorelementen so erfolgt, dass der Schwerpunkt der Teilregionen im Wesentlichen mittig auf die Deteklorelemente abgebildet wird.

6. Verfahren nach einem der vorangehenden Ansprüche,
   wobei in einem weiteren Messschritt die zweite Beleuchtung unstrukturiert erfolgt und die mittels der ersten Beleuchtung angeregte Fluoreszenz ortsaufgelöst detektiert wird.

7. Verfahren nach Anspruch 6,
   wobei das durch den weiteren zweiten Messschritt erhaltene Bild mit dem mit erhöhter Auflösung aufgenommenen Bild verrechnet wird um ein Reduktion des Untergrundsignals im Bild mit erhöhter Auflösung zu erzielen.

8. Verfahren nach einem der vorangehenden Ansprüche,
   wobei durch eine variabel einstellbare Schlitzblende vor den Detektorelementen eine Unterdrückung des außerfokal angeregten Fluoreszenzlichts erfolgt.

9. Verfahren nach einem der vorangehenden Ansprüche,
   wobei die Region aus mehreren, voneinander räumlich separierten linienförmigen Unterregionen besteht.

10. Verfahren nach dem vorhergehenden Anspruch,
    wobei durch ein variables Auslesen und ein variables Zusammenfassen von Detektorelementen eine einstellbare Unterdrückung des außerfokal angeregten Fluoreszenzlichts erfolgt.

11. Verfahren zum Betrieb eines Fluoreszenzmikroskopes nach einem der vorangehenden Ansprüche,
    wobei eine strukturierte Beleuchtung der Probe erfolgt,
    eine erste Detektion von leuchtenden Probenpunkten erfolgt,
    ein räumlicher Versatz der Beleuchtungsverteilung auf der Probe vorgenommen wird mindestens eine zweite Detektion von leuchtenden Probenpunkten erfolgt und
    aus den Werten des räumlichen Versatzes die Lage der detektierten Probenpunkte auf einem zusammengesetzten Probenbild ermittelt und abgespeichert wird.

12. Scanmikroskop mit einer Abtastung einer Probe mittels einer linienförmig ausgebildeten Beleuchtung durch eine erste und zweite Laserbeleuchtung und einem mindestens in einer Richtung ortsauflösenden Detektor zur konfokalen Detektion des Probenlichts,

wobei die erste Laserbeleuchtung eine Fluoreszenzanregung in der Probe auslöst und die zweite Laserbeleuchtung zur Unterteilung der beleuchteten Region in fluoreszierende Teilregionen durch Abregen und/ oder Schalten des Fluoreszenzzustandes der Probe über ein Gitter geführt und dadurch auf der Probe eine Struktur aufweist,

**dadurch gekennzeichnet dass**

in einer dem Gitter nachgeordneten Pupillenebene des Mikroskopobjektives oder in einer zu dieser optisch konjugiert in Ebene zumindest in der ersten Beugungsordnung des Gitters eine Phasenmaske mit einem in ihrer Mitte und/oder in einem symmetrischen Randbereich angeordneten Phasensprung zur Erzeugung einer Begrenzung der zweiten Laserbeleuchtung in Richtung der optischen Achse angeordnet ist.

13. Scanmikroskop nach Anspruch 12, wobei zur lateralen Begrenzung eine Phasenmaske in der nullten Beugungsordnung angeordnet ist.

14. Scanmikroskop nach einem der Ansprüche 12 and 13,
wobei das optische Gitter senkrecht zur Strukturierungsrichtung in Frequenz und/oder Größe des Phasensprungs variabel ausgelegt ist, so dass durch Translation des Gitters die Richtung und/oder die Intensität der Beugungsordnungen eingestellt werden können.

15. Scanmikroskop nach einem der Ansprüche 12-14, wobei die Phasenmasken in ihrer Mitte oder in einem symmetrischen Randbereich einen Phasensprung aufweisen.

16. Scanmikroskop nach dem vorhergehenden Anspruch,
wobei die Phasenmasken in einer senkrecht zur linienförmigen Beleuchtung gelegenen Richtung in Lage und/oder Größe des Phasensprungs variabel ausgelegt sind, so dass durch Translation der Phasenmasken verschiedene Eigenschaften der Lichtbeeinflussung eingestellt werden können.

17. Scanmikroskop nach einem der Ansprüche 12-16, wobei der ortsauflösende Detektor ein Zeilendetektor ist, vor dem sich eine variable Schlitzblende befindet.

18. Scanmikroskop nach einem der Ansprüche 12-17, wobei eine Beleuchtung parallel mit mehreren Linien und die Detektion mit einem ortsauflösenden, flächenförmigen Detektor erfolgt.

**Claims**

1. Method for parallelized imaging in a scanning microscope, a sample being excited to fluorescence by scanning by a linearly designed illumination in at least one region by a first laser, and the sample light being confocally detected with a detector which is spatially resolving at least in one direction, and a subdivision of the fluorescing region into fluorescing subregions being performed via a second laser illumination, structured via a grating, by de-excitation (depopulation) and/or switching the fluorescent state of the sample, **characterized in that** limiting lines for limiting the extent of the detected sample light are produced at least in the direction of the optical axis by means of at least one phase mask, arranged in an objective pupil or plane conjugate to the latter with a phase jump, arranged in the centre thereof and/or in a symmetrical edge region, in the first diffraction order of the grating.

2. Method according to Claim 1, in which limiting lines are produced in a lateral direction as well.

3. Method according to one of the preceding claims, in which the reduction in the extent of the subregions is performed by nonlinear interactions of the second illumination with at least one fluorescence-capable substance present in the sample, **characterized in that**:

   a) a de-excitation of an excited level is performed by stimulated emission (STED) and/or
   b) a depopulation of a ground state is performed by triplet occupation (GSD) and/or
   c) there is a reversible or irreversible optical switching of the at least one fluorescence-capable substance from a state with first fluorescence characteristics into a state with second fluorescence characteristics or reduced fluorescence.

4. Method according to Claim 3, in which a clear assignment of the subregions to the detector elements is performed by optical imaging of the fluorescence emitted by said subregions onto the detector.

5. Method according to one of the preceding claims, in which the assignment of the subregions to the detector elements is performed such that the centre of gravity of the subregions is imaged substantially in the centre of the detector elements.

6. Method according to one of the preceding claims, in which in a further measurement step the second illumination is performed in an unstructured fashion, and the fluorescence excited by means of the first illumination is detected with spatial resolution.

7. Method according to Claim 6, in which the image obtained by the further second measurement step is transformed with the aid of the image recorded with enhanced resolution in order to achieve a reduction in the background signal in the image with enhanced resolution.

8. Method according to one of the preceding claims, in which a suppression of the fluorescence light excited in a fashion out of focus is performed by a variably adjustable split diaphragm upstream of the detector elements.

9. Method according to one of the preceding claims, in which the region comprises a plurality of linear subregions spatially separated from one another.

10. Method according to the preceding claim, in which an adjustable suppression of the fluorescence light excited in a fashion out of focus is performed by a variable selection and a variable combination of detector elements.

11. Method for operating a fluorescence microscope according to one of the preceding claims, in which
a structured illumination of the sample is performed,
a first detection of luminescing sample points is performed,
a spatial offset of the illumination distribution on the sample is undertaken,
at least one second detection of luminescing sample points is performed, and
the position of the detected sample points on a compiled sample image is determined from the values of the spatial offset and stored.

12. Scanning microscope having scanning of a sample by means of a linearly designed illumination by a first and second laser illumination, and having a detector, which is spatially resolving at least in one direction, for confocal detection of the sample light, the first laser illumination initiating a fluorescence excitation in the sample, and the second laser illumination being guided over a grating for the purpose of subdividing the illuminated region into fluorescing subregions by de-excitation and/or switching of the fluorescence state of the sample, and thereby having a structure on the sample, **characterized in that**, at least in the first diffraction order of the grating, a phase mask with a phase jump, arranged in its centre and/or in a symmetrical edge region, for producing a limitation of the second laser illumination in the direction of the optical axis is arranged in a pupil plane, downstream of the grating, of the microscope objective or in a plane optically conjugate to said pupil plane.

13. Scanning microscope according to Claim 12, in which a phase mask is arranged in the zeroth diffraction order for the purpose of lateral limitation.

14. Scanning microscope according to either of Claims 12 and 13, in which the optical grating is designed to be variable perpendicular to the structuring direction in frequency and/or magnitude of the phase jump so that the direction and/or the intensity of the diffraction orders can be adjusted by translation of the grating.

15. Scanning microscope according to one of Claims 12-14, in which the phase masks have a phase jump in their centre or in a symmetrical edge region.

16. Scanning microscope according to the preceding claim, in which the phase masks are designed to be variable in position and/or magnitude of the phase jump in a direction lying perpendicular to the linear illumination so that different characteristics of the influencing of the light can be adjusted by translation of the phase masks.

17. Scanning microscope according to one of Claims 12-16, in which the spatially resolving detector is a line detector upstream of which a variable split diaphragm is located.

18. Scanning microscope according to one of Claims 12-17, in which an illumination is performed parallel to a plurality of lines, and the detection is performed with a spatially resolving, planar detector.

**Revendications**

1. Procédé de formation d'image parallélisé dans un microscope à balayage, dans lequel un échantillon est excité par balayage jusqu'à fluorescence par un éclairement de forme linéaire dans au moins une région par l'intermédiaire d'un premier laser et la lumière échantillon est détectée de manière confocale au moyen d'un détecteur ayant une résolution spatiale dans au moins une direction
et une subdivision de la région fluorescente en des régions partielles génératrices de fluorescence est effectuée par l'intermédiaire d'un second éclairement laser structuré au moyen d'un réseau par désexcitation (dépeuplement) et/ou commutation de l'état de fluorescence de l'échantillon,
**caractérisé en ce que**
des lignes de limitation sont générées pour limiter l'étendue de la lumière échantillon détectée, au moins dans la direction de l'axe optique, par au moins un masque de phase disposé dans une pupille d'objectif ou dans un plan conjugué par rapport à celle-ci et présentant un saut de phase situé en son milieu et/ou dans une zone de bord symétrique, au premier ordre de diffraction du réseau.

**2.** Procédé selon la revendication 1, dans lequel des lignes de limitation sont également générées dans une direction latérale.

**3.** Procédé selon l'une quelconque des revendications précédentes, dans lequel la réduction de l'étendue des régions partielles est effectuée par des interactions non linéaires du second éclairement au moyen d'au moins une substance génératrice de fluorescence présente dans l'échantillon, **caractérisé en ce que** :

a) une désexcitation d'un niveau excité est effectuée par émission stimulée (STED) et/ou
b) un dépeuplement d'un état fondamental par occupation d'état triplet (GSD) et/ou
c) une commutation optique réversible ou irréversible de l'au moins une substance génératrice de fluorescence d'un état correspondant à des premières propriétés de la fluorescence à un état correspondant à des secondes propriétés de la fluorescence ou de fluorescence réduite.

**4.** Procédé selon la revendication 3, dans lequel une affectation univoque des régions partielles aux éléments détecteurs est effectuée par formation d'une image optique sur le détecteur de la fluorescence émise par lesdites régions partielles.

**5.** Procédé selon l'une quelconque des revendications précédentes, dans lequel l'affectation des régions partielles aux éléments détecteurs est effectuée de telle manière que l'image du centre de gravité des sous-régions soit formée sensiblement au milieu sur les éléments détecteurs.

**6.** Procédé selon l'une quelconque des revendications précédentes, dans lequel, lors d'une étape de mesure supplémentaire, le second éclairement s'effectue de manière non structurée et est détecté de manière spatialement résolue au moyen de la fluorescence excitée par le premier éclairement.

**7.** Procédé selon la revendication 6, dans lequel l'image obtenue par la seconde étape de mesure supplémentaire est compensée par l'image acquise avec une résolution plus élevée afin d'obtenir une réduction du signal d'arrière-plan dans l'image ayant une résolution plus élevée.

**8.** Procédé selon l'une quelconque des revendications précédentes, dans lequel une suppression de la lumière de fluorescence excitée de manière afocale s'effectue au moyen d'un diaphragme à fente réglable de manière variable placé devant les éléments détecteurs.

**9.** Procédé selon l'une quelconque des revendications précédentes, dans lequel la région est constituée d'une pluralité de sous-régions de forme linéaire spatialement séparées les unes des autres.

**10.** Procédé selon l'une quelconque des revendications précédentes, dans lequel une suppression réglable de la lumière de fluorescence excitée de manière afocale est effectuée au moyen d'une lecture variable et d'une combinaison variable d'éléments détecteurs.

**11.** Procédé de mise en fonctionnement d'un microscope à fluorescence selon l'une quelconque des revendications précédentes, dans lequel un éclairement structuré de l'échantillon est effectué, une première détection de points échantillons luminescents est effectuée, un décalage spatial de la distribution d'éclairement sur l'échantillon est réalisé, au moins une seconde détection de points échantillons luminescents est effectuée, et la position des points échantillons détectés sur l'image échantillon composite est obtenue à partir des valeurs du décalage spatial et est stockée.

**12.** Microscope à balayage comprenant un dispositif d'analyse d'un échantillon au moyen d'un éclairement réalisé sous forme linéaire par des premier et second éclairements laser et un détecteur présentant une résolution spatiale dans au moins une direction pour la détection confocale de la lumière échantillon, dans lequel le premier éclairement laser résout une excitation de fluorescence dans l'échantillon et le second éclairement laser est guidé de manière à subdiviser la région éclairée en des régions partielles génératrices de fluorescence par désexcitation et/ou commutation de l'état de fluorescence de l'échantillon par l'intermédiaire d'un réseau et présente par conséquent sur l'échantillon une structure, **caractérisé en ce qu'**un masque de phase présentant un saut de phase en son milieu et/ou dans une région de bord symétrique pour générer une limitation du second éclairement laser dans la direction de l'axe optique est disposé dans un plan de pupille de l'objectif de microscope disposé en aval du réseau ou dans un plan optiquement conjugué par rapport à celui-ci, au moins au premier ordre de diffraction du réseau.

**13.** Microscope à balayage selon la revendication 12, dans lequel il est prévu un masque de phase à l'ordre de diffraction nul pour une limitation latérale.

**14.** Microscope à balayage selon l'une des revendications 12 ou 13, dans lequel le réseau optique est configuré de manière à pouvoir varier perpendiculairement à la direction de structuration en fréquence et/ou en taille du saut de phase de manière à ce que la direction et/ou l'intensité des ordres de diffraction puissent être réglées par translation du réseau.

**15.** Microscope à balayage selon l'une quelconque des revendications 12 à 14, dans lequel les masques de phase présentent un saut de phase en leur milieu ou dans une zone de bord symétrique.

**16.** Microscope à balayage selon l'une quelconque des revendications précédentes, dans lequel les masques de phase sont configurés de manière à présenter un saut de phase variable en position et/ou en taille dans une direction orientée perpendiculairement à l'éclairement de forme linéaire de manière à ce que différentes propriétés de l'influence optique des masques de phase puissent être réglées par translation des masques de phase.

**17.** Microscope à balayage selon l'une quelconque des revendications 12 à 16, dans lequel le détecteur à résolution spatiale est un détecteur linéaire en face duquel se trouve un diaphragme à fente variable.

**18.** Microscope à balayage selon l'une quelconque des revendications 12 à 17, dans lequel un éclairement est effectué parallèlement à une pluralité de lignes et la détection est effectuée au moyen d'un détecteur plan à résolution spatiale.

1.

Anregung      Abregung      Fluoreszenzdetektion
(gleichzeitig mit Abregung)

2.

Entvölkem      Anregung      Fluoreszenzdetektion
(gleichzeitig mit Anregung)

3.

Ausschalten      Anregung      Fluoreszenzdetektion      Anschalten
(gleichzeitig mit Anregung)

Zeit

**Abbildung 1**                         **Stand der Technik**

Schaltstrahlverteilung
In Objektebene

X

XX

X

Anregungsverteilung
In Objektebene

Überlagerung
von Anregung
Und Schaltlicht
In Objektebene

Lichtverteilung
In Objektebene

Kamera (Pixel +
Spaltblende)

Lichtverteilung
In Kameraebene

**Abbildung 2**

X: Nullte Beugungsordnung + Abb. 7a

XX:+/- erste Beugungsordnung + Abb. 7a

Kamerapixel und Licht- verteilung

Objektpunkt- zuordnung im 1.-10. Scanschritt

Resultuerendes Zeilenbild

Wiederholen der Prozedur nach y-Scanschritt

Resultierendes 2D-Bild

**Abbildung 3**

Laterale
Lichtverteilung
In Objektebene

Axiale
Lichtverteilung
In Objektebene

**Abbildung 4**

Axiale
Lichtverteilung
In Objektebene
Und axial
strukturierte
Schaltlichtverteilung

z.B.Abb.
7b oder c
+ 477nm

Resultierend
Axiale
Lichtverteilung
In Objektebene

**Abbildung 5**

Phasenelement von
Abb. 7a)

Element zur
Erzeugung von
n (hier 3) Teilstrahlen

Pupillenebene
des Beleuchtungsstrahlengangs

Element zur
Beleuchtung der
Pupille mit 3 Linien

z.B. Phasengitter

Abbildende
Linse

Hauptfarbteiler

**Abbildung 6**

Stand der Technik

Abbildung 7

Lichtverteilungen in Pupille

Polarisaionsrichtung

Pupille

λ/2-Platte

Phasensprung
a) Von Pi

Doppellinie    strukt. Linie

λ/2-Platte

Phasensprung
Von Pi

b)

Verschieberichtung

c)

Verschieberichtung

Verschieberichtung

**Abbildung 8**

Pupille      Glassubstrat (transparent, breitbandig entspiegelt)

a)

X

XX      Reflektierende Streifen

X

b)    Zum Detektor      Zur Probe

Beleuchtung

**Abbildung 9**

X: +/ - 1. Beugungsordnung von S1 in Fig. 11

XX: =. Beugungsordnung von S1 in Fig.11 + S2,S3

a)

b)

c)

d)

**Abbildung 10**

a)

b)

**Abbildung 11**

**Abbildung 12**

DC: dichroidischer Filter
NT: Neutralteiler
AOTF: Akusto-optisch durchstimmbarer Filter

**Abbildung 13**

a)

Justage
Gitter

Linie

b)

Justage
Gitter

Linie

Relative Phase in Transmission:

0    π    0

c)

Justage
Maske

Linie

**Abbildung 14**

**Abbildung 15**

**Abbildung 16**

Phaseneingriff

Relay-Zoom
4,0x – 4,7x

HFT
Schnittstelle zum
LSM LIVE

Einkopplung Ausleseanregung +
Löschen (405 nm)

Achromat f = 150 mm

Liniengitter

Achromat für Powell-Linse f = 10 mm

Powell

**Abbildung 17**

Intensität durch Interferenz
der +-1. Beugungsordnungen
**a) laterale Intensitätsstruktur**

Intensität durch Phaseneingriff
in der 0. Beugungsordnung

Überlagerung beider
Anteile

**b) axiale Intensitätsstruktur**

**Abbildung 18**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20010045523 A1
- DE 102004034962 A1
- DE 10257237 A1
- EP 1617271 A2
- DE 102004034960 A1


**In der Beschreibung aufgeführte Nicht-Patentliteratur**

- **KLAR ; HELL.** *Opt.Lett.,* 1999, vol. 24, 954-956
- **HELL ; KROUG.** *Appl. Phys. B,* 1995, vol. 60, 495-497
- **ZUSTAND ; HELL ; JAKOBS ; KASTRUP.** *Appl. Phys. A,* 2003, vol. 77, 859-860
- **KLAR et al.** *PNAS,* 2000, vol. 97, 8206-8210
- **HOFFMANN et al.** *PNAS,* 2005, vol. 102, 17565-17569
- **HABUCHI et al.** *PNAS,* 2005, vol. 102, 9511-9516